# EUROPEAN PATENT SPECIFICATION

(11) **EP 3 330 806 B1**
(45) Date of publication and mention of the grant of the patent: **07.04.2021**
(21) Application number: 17816385.3
(22) Date of filing: 16.05.2017
(51) Int. Cl.: G03G 21/16, H04N 1/00, G03G 15/00

(54) **IMAGE-FORMING DEVICE**
BILDERZEUGUNGSVORRICHTUNG
DISPOSITIF DE FORMATION D'IMAGE

(30) Priority: 24.08.2016 JP 2016163233
(43) Date of publication of application: 06.06.2018
(73) Proprietor: KYOCERA Document Solutions Inc., Osaka-shi, Osaka 540-8585 (JP)
(72) Inventor: TANAKA Hiroyuki, Osaka-Shi Osaka 540-8585 (JP); FUKUDA Motoyuki, Osaka-Shi Osaka 540-8585 (JP); NAMII Takashi, Osaka-Shi Osaka 540-8585 (JP)
(74) Representative: Beetz & Partner mbB
(86) International application number: PCT/JP2017/018368
(87) International publication number: WO 2018/037640

(56) References cited:
- JP-A- 2005 187 190
- JP-A- 2006 052 077
- JP-A- 2007 119 198
- JP-A- 2012 201 424
- JP-A- 2014 167 518
- US-A1- 2005 141 936
- US-A1- 2006 232 793
- US-A1- 2010 290 812

## Description

### Technical Field

The present invention relates to an image forming apparatus such as a copy machine or a printer, and relates particularly to an image forming apparatus provided with an in-body discharge space that is open on a downstream side in a sheet discharge direction and on an apparatus body front surface side.

### Background Art

Conventionally, there is known an image forming apparatus of a type provided with an in-body paper discharge space (an in-body discharge space) that is open on a downstream side in a discharge direction of a paper sheet (a sheet) and on an apparatus body front surface side.

For example, US 2006/232793A1 discloses an image forming apparatus provided with a discharge port that is provided in an apparatus body and through which a paper sheet on which an image has been formed is discharged in a left direction, an in-body paper discharge space that is provided on a downstream side of the discharge port in a paper discharge direction and is delimited on a left side by a pivotable side wall member and is open on a front surface side, and a paper placement surface that is provided in the in-body paper discharge space, so that a discharged paper sheet is loaded, depending on its size, on the paper placement surface alone or on the paper placement surface and on the side wall member pivoted into a horizontal or inclined orientation Document US2005/141936 is a relevant prior art document.

### Summary of the Invention

The invention is defined by the appended claims.

### Advantageous Effects of the Invention

According to the image forming apparatus according to the first aspect of the present invention, at a part of the discharge portion on the downstream side in the discharge direction and on the apparatus body front surface side, the lifting piece is provided that protrudes upward beyond the upper surface of the discharge portion and lifts a corner portion of a sheet. The lifting piece is inclined upward toward the downstream side in the discharge direction and the apparatus body front surface side and has the loading surface on which a sheet is loaded. With this configuration, a corner portion of a sheet on the downstream side in the discharge direction and on the apparatus body front surface side, the sheet being discharged through the discharge port, is lifted upward toward the downstream side in the discharge direction and the apparatus body front surface side by the loading surface of the lifting piece and thus is bent. Thus, even in a case where the number of sheets discharged on the discharge portion is small, it can be facilitated to visually recognize, from a front surface side and a lateral side of the apparatus body, a surface (a lower surface) of a sheet discharged on the discharge portion.

Furthermore, a corner portion of a sheet is lifted by the lifting piece, and thus it becomes easy to take out the sheet.

Furthermore, the rear surface of the lifting piece is formed in a dark color. With this configuration, contrast between the rear surface of the lifting piece and a sheet can be increased, and thus visibility of the sheet can be further improved.

Still other objects of the present invention and specific advantages provided by the present invention will be made further apparent from the following description of embodiments.

### Brief Description of Drawings

[FIG. 1] is a perspective view illustrating a structure of an image forming apparatus of a first embodiment of the present invention.
[FIG. 2] is a view, as shown from above, of a structure on a periphery of an in-body paper discharge space in the image forming apparatus of the first embodiment of the present invention.
[FIG. 3] is a perspective view illustrating a structure of a paper discharge tray in the image forming apparatus of the first embodiment of the present invention.
[FIG. 4] is a perspective view illustrating a structure on a periphery of a lifting piece in the image forming apparatus of the first embodiment of the present invention.
[FIG. 5] is a view, as shown from above, of a structure on a periphery of the in-body paper discharge space in the image forming apparatus of the first embodiment of the present invention, showing a state where a paper sheet is discharged on a paper discharge tray.
[FIG. 6] is a perspective view illustrating a structure on a periphery of the lifting piece in the image forming apparatus of the first embodiment of the present invention, showing a state where a paper sheet is discharged on the paper discharge tray.
[FIG. 7] is a sectional view illustrating a structure of the lifting piece and a housing concave portion in the image forming apparatus of the first embodiment of the present invention, showing a state where the lifting piece is disposed at a protruding position.
[FIG. 8] is a sectional view illustrating a structure of the lifting piece and the housing concave portion in the image forming apparatus of the first embodiment of the present invention, showing a state where the lifting piece is disposed at a housing position.
[FIG. 9] is a sectional view illustrating a structure of a lifting piece and a housing concave portion in an image forming apparatus of a second embodiment of the present invention, showing a state where the lifting piece is disposed at a protruding position.
[FIG. 10] is a sectional view illustrating a structure of the lifting piece and the housing concave portion in the image forming apparatus of the second embodiment of the present invention, showing a state where the lifting piece is disposed at a housing position.
[FIG. 11] is a sectional view illustrating a structure of a lifting piece and a housing concave portion in an image forming apparatus as a first modification example of the present invention, showing a state where the lifting piece is disposed at a protruding position.
[FIG. 12] is a sectional view illustrating a structure of the lifting piece and the housing concave portion in the image forming apparatus as the first modification example of the present invention, showing a state where the lifting piece is disposed at a housing position.
[FIG. 13] is a view, as shown from above, of a structure on a periphery of an in-body paper discharge space in an image forming apparatus as a second modification example of the present invention.
[FIG. 14] is a view, as shown from above, of a structure on a periphery of an in-body paper discharge space in an image forming apparatus as a third modification example of the present invention.
[FIG. 15] is a perspective view illustrating a structure of a lifting piece in an image forming apparatus as a fourth modification example of the present invention.

### Description of Embodiments

The following describes embodiments of the present invention with reference to the appended drawings.

### (First Embodiment)

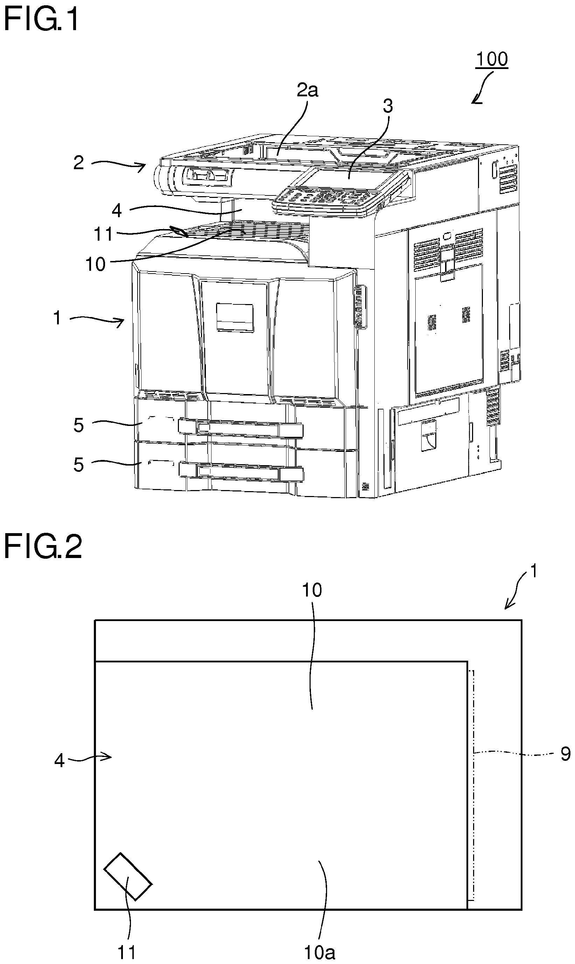

With reference to FIG. 1 to FIG. 8, a description is given of an image forming apparatus 100 of a first embodiment of the present invention. As shown in FIG. 1, the image forming apparatus 100 (herein, a digital multi-functional peripheral is illustrated as one example) is provided with an apparatus body (an image forming apparatus body) 1 and an image reading portion 2 that is arranged above the apparatus body 1.

In the image reading portion 2, there is provided a reading portion that reads image information of an original document on a contact glass 2a. The reading portion is composed of a scanning optical system that is equipped with a scanner lamp and a mirror, a condenser lens that condenses reflected light from an original document to form an image, and a CCD sensor that converts formed image light into an electric signal, and so on (none of these is shown). The reading portion reads an original document image and converts it into image data.

In a front surface part of the image reading portion 2, there is provided an operation panel 3 that has a display portion and operation keys. Above the image reading portion 2, a platen (not shown) that presses down an original document placed on the contact glass 2a is provided so as to be openable/closable.

Between the image reading portion 2 and the apparatus body 1, there is provided an in-body paper discharge space (an in-body discharge space) 4 that is largely open toward a left side surface and frontward.

In a front surface part of the apparatus body 1, a plurality of (herein, two) paper feed cassettes 5 that house paper sheets (sheets) therein are provided so as to be mountable/demountable with respect to the apparatus body 1.

Inside the apparatus body 1, there are provided an image forming portion, a fixing portion, a paper sheet conveyance portion, and so on, which are not shown. Based on image data read by the image reading portion 2, the image forming portion transfers a toner image on a paper sheet fed thereto and thus forms an image thereon. The image forming portion includes a photosensitive drum that bears an electrostatic latent image thereon, a charging unit that charges a surface of the photosensitive drum, an exposure unit that forms, by using a laser beam or the like, an electrostatic latent image corresponding to an original document image on the surface of the photosensitive drum, a developing unit that makes a developer adhere to the thus formed electrostatic latent image and thus forms a toner image, a transfer roller that transfers the toner image on a paper sheet, a cleaning blade that removes residual toner on the surface of the photosensitive drum, and so on. Furthermore, the fixing portion heats and presses the paper sheet on which the toner image has been transferred and thus fixes the toner image on the paper sheet. The paper sheet conveyance portion (not shown) extends upward along a right side surface of the apparatus body 1 and conveys a paper sheet from the paper sheet cassettes 5 to the image forming portion.

Next, a description is give of a structure on a periphery of the in-body paper discharge space 4.

As shown in FIG. 2, on a right side of the in-body paper discharge space 4 (an upstream side in a paper discharge direction), a discharge port 9 is provided in the apparatus body 1, and a paper sheet on which an image has been formed is discharged through the discharge port 9 from a right side toward a left side. Furthermore, below the in-body paper discharge space 4, there is provided a paper discharge tray (a discharge portion) 10 on which a paper sheet discharged through the discharge port 9 is loaded.

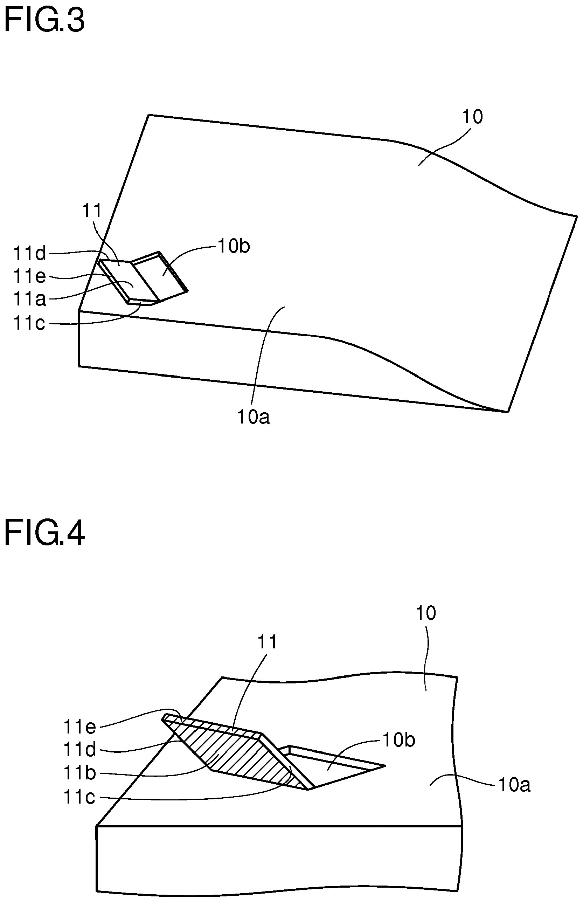

At a part of the paper discharge tray 10 on a left side of the apparatus body 1 (a downstream side of the discharge port 9 in the paper discharge direction) and on a front surface side of the apparatus body 1 (a lower side in FIG. 2), a lifting piece 11 is provided that protrudes upward beyond an upper surface 10a of the paper discharge tray 10 and lifts a corner portion (an angled portion) of a paper sheet. As shown in FIG. 3 and FIG. 4, the lifting piece 11 is formed of a rectangular plate member and disposed so as to be inclined with respect to the upper surface 10a of the paper discharge tray 10.

The lifting piece 11 has a loading surface 11a on which a paper sheet is loaded, a rear surface 11b that is disposed on an opposite side to the loading surface 11a, a first side surface 11c and a second side surface 11d, and an upper end surface 11e that is linked to an upper end of the loading surface 11a and to an upper end of the rear surface 11b.

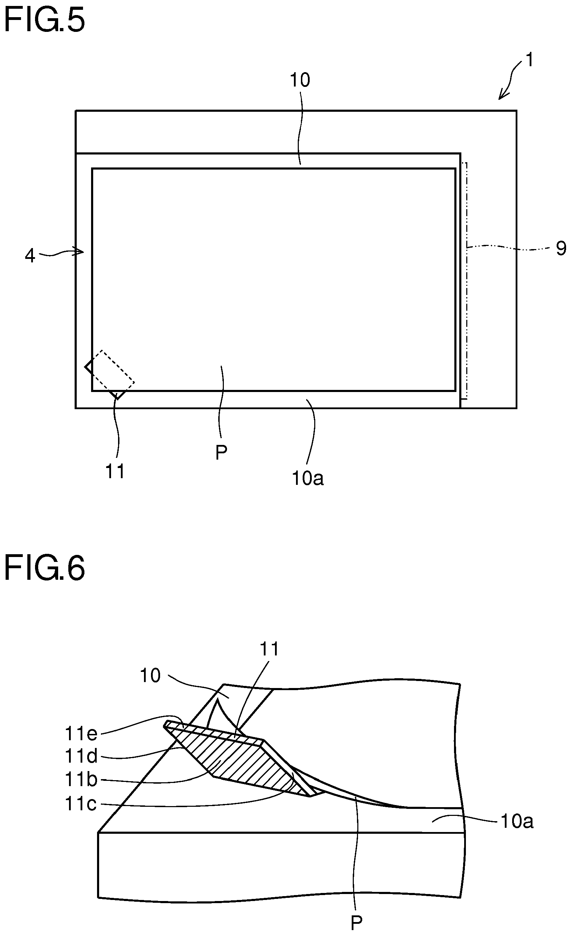

The loading surface 11a is inclined upward toward the left side and the front surface side of the apparatus body 1. The rear surface 11b faces the left side and the front surface side of the apparatus body 1 and is formed in a dark color, such as black, dark grey, or dark brown, having a brightness lower than that of a general-purpose white paper sheet (regular paper). The loading surface 11a may be formed in a dark color or a bright color. In FIG. 4 and FIG. 6, a portion colored in a dark color is crosshatched.

The first side surface 11c faces the right side and the front surface side of the apparatus body 1. The second side surface 11d faces the left side and a rear surface side of the apparatus body 1. Furthermore, the first side surface 11c and the second side surface 11d are formed in a color different from that of the rear surface 11b, for example, a bright color having a high brightness such as white. The upper end surface 11e faces the left side and the front surface side of the apparatus body 1 and is formed in the same color (a dark color) as that of the rear surface 11b. A lower surface of the in-body paper discharge space 4 (the upper surface 10a of the paper discharge tray 10), a surface at the back thereof, and a right side surface thereof may be formed in a dark color or a bright color. It is, however, preferable to form these surfaces in a dark color.

In the image forming apparatus 100, when a paper sheet is discharged on the paper discharge tray 10 through the discharge port 9, a corner portion of the paper sheet on a left side (a tip end side) and on a front surface side thereof is guided upward by the loading surface 11a of the lifting piece 11. Further, as shown in FIG. 5 and FIG. 6, in a state where a paper sheet P of a prescribed size or larger is loaded on the paper discharge tray 10, a corner portion of the paper sheet P on a left side and on a front surface side thereof is bent and protrudes upward beyond an upper end of the lifting piece 11.

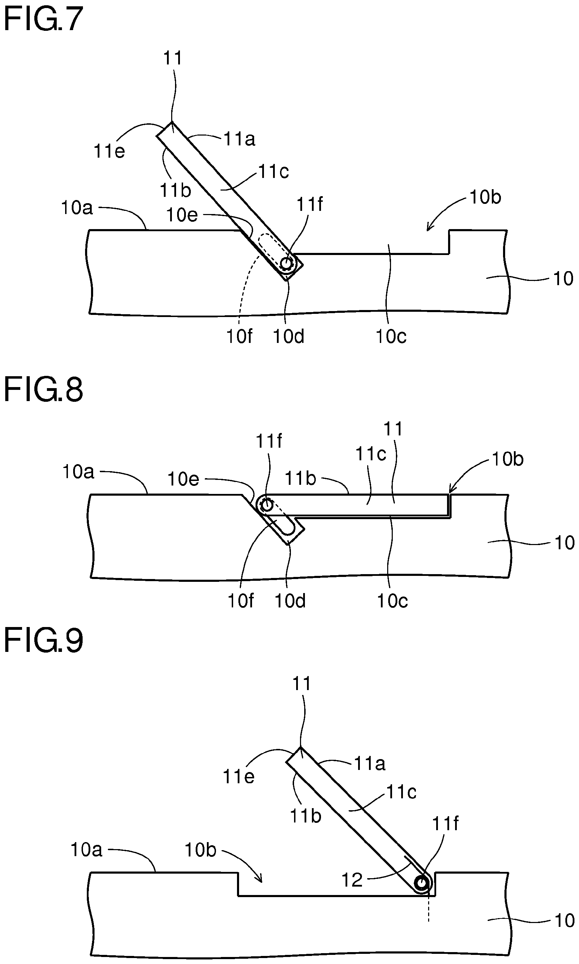

Furthermore, as shown in FIG. 3 and FIG. 4, a housing concave portion 10b for housing the lifting piece 11 therein is formed in the upper surface 10a of the paper discharge tray 10. The lifting piece 11 is selectively disposed at a protruding position at which it protrudes upward beyond the upper surface 10a of the paper discharge tray 10 (a position shown in FIG. 4 and FIG. 7) and at a housing position at which it is housed in the housing concave portion 10b (a position shown in FIG. 8). In this embodiment, the housing concave portion 10b is formed at a part on the right side and on the rear surface side with respect to the lifting piece 11.

As shown in FIG. 7 and FIG. 8, at respective lower parts of the first side surface 11c and the second side surface 11d of the lifting piece 11, a pair of axis portions 11f are provided. The housing concave portion 10b has an entire body housing portion 10c that houses an entire body of the lifting piece 11 in a state where the lifting piece 11 is disposed at the housing position and a lower part housing portion 10d that is provided adjacently to a left side of the entire body housing portion 10c (a downstream side in the paper discharge direction) and houses a lower part of the lifting piece 11 in a state where the lifting piece 11 is disposed at the protruding position. A side surface 10e disposed on the left side and on a front surface side of the housing concave portion 10b is an inclined surface that retains the lifting piece 11 at a prescribed angle.

Furthermore, in the entire body housing portion 10c and the lower part housing portion 10d, an elongated hole 10f is formed that guides the axis portions 11f. The axis portions 11f are caused to move along the elongated hole 10f, and thus the lifting piece 11 can be selectively disposed at the protruding position and at the housing position.

In this embodiment, as described above, at the part of the paper discharge tray 10 on the left side (the downstream side in the paper discharge direction) and on the front surface side, the lifting piece 11 is provided that protrudes upward beyond the upper surface 10a of the paper discharge tray 10 and lifts a corner portion of the paper sheet P. The lifting piece 11 has the loading surface 11a that is inclined upward toward the left side and the front surface side and on which the paper sheet P is loaded. With this configuration, when the paper sheet P is discharged through the discharge port 9, a corner portion of the paper sheet P on a left side (a tip end side) and a front surface side thereof is lifted upward toward the left side and the front surface side by the loading surface 11a of the lifting piece 11 and thus is bent. Thus, even in a case where the number of the paper sheets P discharged on the paper discharge tray 10 is small, it can be facilitated to visually recognize, from the front surface side and a lateral side of the apparatus body 1, a surface (a lower surface) of the paper sheet P discharged on the paper discharge tray 10.

Furthermore, a corner portion of the paper sheet P is lifted by the lifting piece 11, and thus it becomes easy to take out the paper sheet P.

Furthermore, the rear surface 11b of the lifting piece 11 is formed in a dark color. With this configuration, contrast between the rear surface 11b of the lifting piece 11 and the surface (the lower surface) of the paper sheet P can be increased, and thus visibility of the paper sheet P can be further improved.

In a case where a part of the paper discharge tray 10 on the downstream side in the paper discharge direction is formed into a substantially flat loading surface (in a case where a rib or the like having a constant height is not provided), the paper sheet P is loaded flat thereon without being rippled. It is, therefore, particularly effective to apply the present invention to such a case so that visual recognition of the paper sheet P is facilitated.

Furthermore, as described above, the housing concave portion 10b for housing the lifting piece 11 therein is formed in the upper surface 10a of the paper discharge tray 10. With this configuration, when not used, the lifting piece 11 can be housed in the housing concave portion 10b.

Furthermore, as described above, the first side surface 11c and the second side surface 11d of the lifting piece 11 are formed in a color different from that of the rear surface 11b. With this configuration, visibility of the first side surface 11c and the second side surface 11d can be improved, and thus it can be easily determined whether the lifting piece 11 is disposed at the protruding position or at the housing position.

Furthermore, as described above, the upper end surface 11e of the lifting piece 11 is formed in the same color as that of the rear surface 11b. With this configuration, contrast at a boundary portion between the lifting piece 11 and the paper sheet P can be increased, and thus visibility of the paper sheet P can be further improved.

Furthermore, as described above, when the paper sheet P of a prescribed size or larger is loaded on the paper discharge tray 10, a corner portion of the paper sheet P protrudes upward beyond the lifting piece 11. With this configuration, visibility of the paper sheet P can be further improved.

### (Second Embodiment)

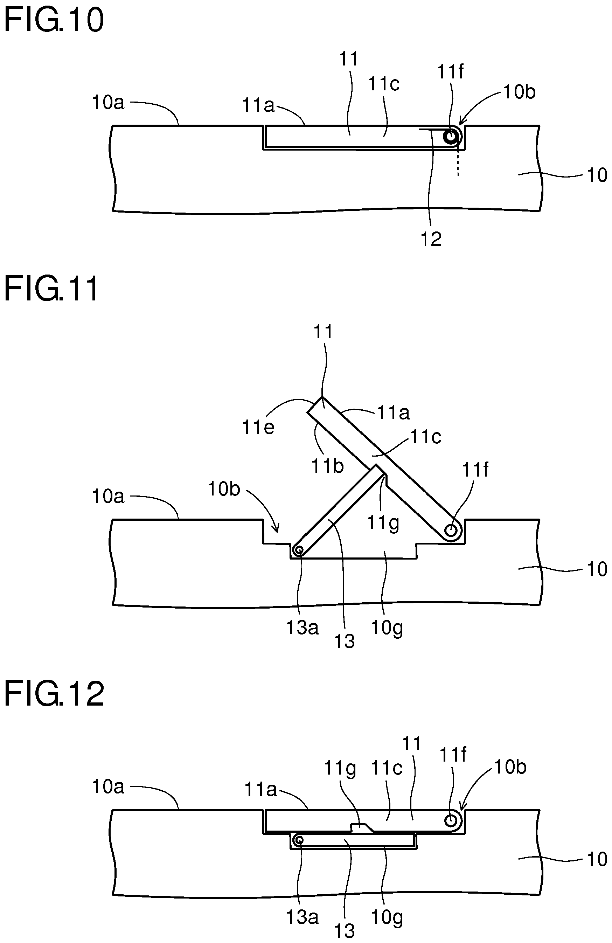

In a second embodiment of the present invention, as shown in FIG. 9 and FIG. 10, unlike in the foregoing first embodiment, a housing concave portion 10b for housing a lifting piece 11 therein is formed on a left side and on a front surface side with respect to the lifting piece 11. Furthermore, the lifting piece 11 swings about axis portions 11f. A torsion spring 12 is mounted to the axis portions 11f of the lifting piece 11. One end of the torsion spring 12 is secured to the lifting piece 11, and the other end thereof is secured to the housing concave portion 10b. An inclination angle of the lifting piece 11 with respect to an upper surface 10a is restricted by an unshown restriction portion.

In an image forming apparatus 100 having this configuration, when the number of paper sheets P loaded on a paper discharge tray 10 is increased, due to a weight of the paper sheets P, a rear surface 11b of the lifting piece 11 falls down against a biasing force of the torsion spring 12 in such a direction as to approach the upper surface 10a of the paper discharge tray 10 (a counterclockwise direction in FIG. 9), thus decreasing an inclination angle of the lifting piece 11.

Other components of the second embodiment are structured similarly to those in the foregoing first embodiment.

In this embodiment, as described above, the lifting piece 11 is configured so that when the number of the paper sheets P on the paper discharge tray 10 is increased, the rear surface 11b falls down in such a direction as to approach the upper surface 10a of the paper discharge tray 10. With this configuration, a paper sheet load capacity of the paper discharge tray 10 can be secured.

Furthermore, similarly to the first embodiment, a first side surface 11c and a second side surface 11d of the lifting piece 11 are formed in a color different from that of the rear surface 11b, and thus visibility of the first side surface 11c and the second side surface 11d can be improved. With this configuration, an amount of the paper sheets P on the paper discharge tray 10 can be easily estimated based on an inclination angle of the lifting piece 11.

Other effects of the second embodiment are similar to those of the foregoing first embodiment.

The embodiments disclosed herein are to be construed in all respects as illustrative and not limiting. The scope of the present invention is indicated by the appended claims rather than by the foregoing description of the embodiments.

For example, while an example has been described in which the present invention is applied to a digital multi-functional peripheral, the present invention is not limited thereto. Needless to say, the present invention is applicable to various types of image forming apparatuses each provided with an in-body discharge space that is open on a downstream side in a discharge direction and on an apparatus body front surface side, such as a copy machine, a printer, and a facsimile.

Furthermore, the lifting piece 11 and the housing concave portion 10b may be formed to have structures different from those in the foregoing embodiments. For example, they may be configured as in a first modification example of the present invention shown in FIG. 11 and FIG. 12. Specifically, a housing concave portion 10b is formed on a left side and on a front surface side with respect to a lifting piece 11. An engaging concave portion 11g with which a support piece 13 is engaged is formed in a rear surface 11b of the lifting piece 11. In a lower part of the housing concave portion 10b, there is provided a support piece housing concave portion 10g for housing the support piece 13 therein. The support piece 13 pivots about an axis portion 13a that is provided at a lower part thereof and thus is selectively disposed at a support position at which the support piece 13 is engaged with the engaging concave portion 11g of the lifting piece 11 and supports the lifting piece 11 at a prescribed angle (a position shown in FIG. 11) and at a housing position at which the support piece 13 is housed in the support piece housing concave portion 10g (a position shown in FIG. 12).

Furthermore, a configuration may be adopted in which the lifting piece 11 is secured to the upper surface10a of the paper discharge tray 10. Further, a configuration may also be adopted in which the housing concave portion 10b is not provided in the upper surface 10a of the paper discharge tray 10.

Furthermore, while the foregoing embodiments have described an example in which the first side surface 11c and the second side surface 11d of the lifting piece 11 are formed in a bright color, the present invention is not limited thereto. A configuration may also be adopted in which the first side surface 11c and the second side surface 11d are each provided with a light emitting element (not shown) so that they emit light. By this configuration, visibility of the first side surface 11c and the second side surface 11d can be further improved, and thus it can be more easily determined whether the lifting piece 11 is disposed at the protruding position or at the housing position. Furthermore, although external light can hardly reach the in-body paper discharge space 4, the first side surface 11c and the second side surface 11d emit light, brightening a periphery of the lifting piece 11, and thus visibility of the paper sheet P can be further improved.

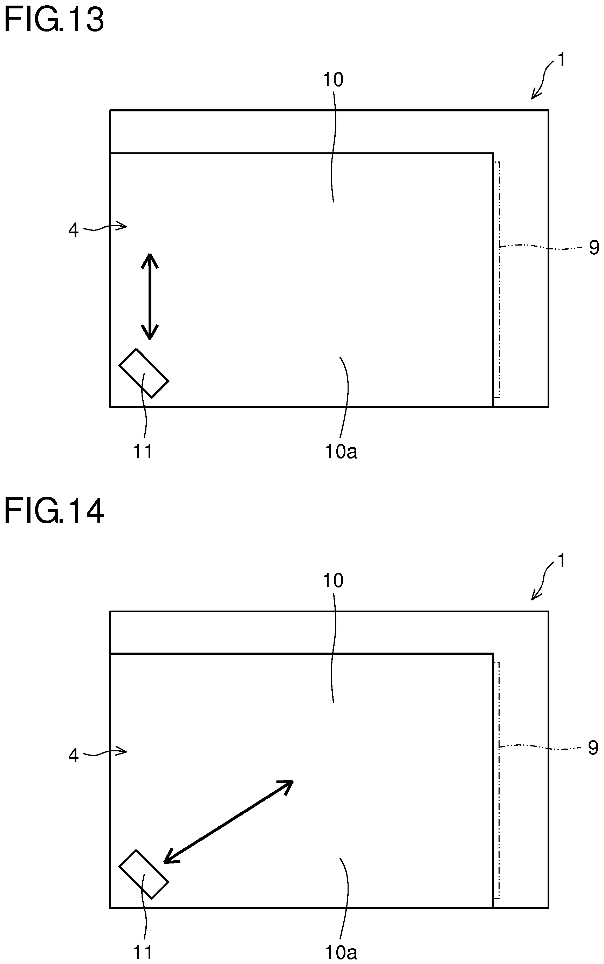

Furthermore, while the foregoing embodiments have described an example in which the lifting piece 11 does not move in a front-rear direction or a left-right direction of the apparatus body 1, the present invention is not limited thereto. For example, as in a second modification example of the present invention shown in FIG. 13, the lifting piece 11 may be configured so as to be movable in the front-rear direction of the apparatus body 1. By this configuration, the lifting piece 11 can be disposed at an appropriate position in accordance with a size of the paper sheet P discharged on the paper discharge tray 10. Furthermore, the paper discharge tray 10 can be used both in a center-alignment-type image forming apparatus and a one-side-alignment-type image forming apparatus.

Furthermore, as in a third modification example of the present invention shown in FIG. 14, the lifting piece 11 may be configured so as to be movable from a leftward front side to a rightward rear side. By this configuration, the lifting piece 11 can be disposed at an appropriate position in accordance with a size of the paper sheet P discharged on the paper discharge tray 10. The lifting piece 11 may also be configured so as to be movable only in the left-right direction.

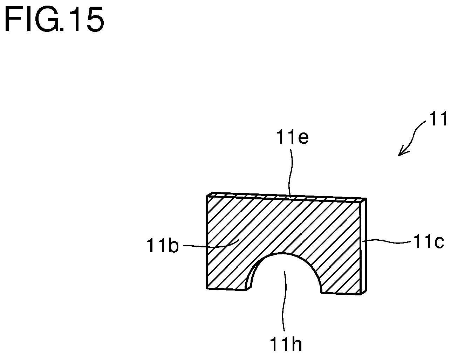

Furthermore, while the foregoing embodiments have described an example in which the lifting piece 11 is formed in a rectangular shape, the present invention is not limited thereto. For example, as in a fourth modification example of the present invention shown in FIG. 15, a cutout 11h (or a through-hole) may be formed in a lower part of the lifting piece 11. By this configuration, the paper sheet P can be visually recognized through the cutout 11h (or the through-hole), and thus even in a case where a corner portion of the paper sheet P is not protruding upward beyond the upper end of the lifting piece 11, the paper sheet P can be visually recognized with ease.

## Claims

1. An image forming apparatus (100), comprising:
a discharge port (9) that is provided in an apparatus body (1) and through which a sheet (P) on which an image has been formed is discharged from one side toward another side in a left-right direction;
an in-body discharge space (4) that is provided on a downstream side of the discharge port (9) in a discharge direction and is open on a downstream side in the discharge direction and on an apparatus body front surface side; and
a discharge portion (10) that is provided in the in-body discharge space (4) and on which the sheet (P) discharged is loaded,
a lifting piece (11) that protrudes upward beyond an upper surface of the discharge portion (10),
the lifting piece (11) has a loading surface (11a) on which the sheet (P) is loaded, and a rear surface (11b) that is disposed on an opposite side to the loading surface (11a), and
the rear surface (11b) is formed in a dark color,
**characterized in that**
the lifting piece (11) is provided at a part of the discharge portion (10) on the downstream side in the discharge direction and on the apparatus body front surface side,
the loading surface (11a) is inclined upward toward the downstream side in the discharge direction and the apparatus body front surface side, and faces an upstream side in the discharge direction and an apparatus body rear surface side, so that the lifting piece (11) lifts a corner portion of the sheet (P).

2. The image forming apparatus (100) according to claim 1, wherein
a housing concave portion for housing the lifting piece (11) therein is formed in the upper surface of the discharge portion (10), and
the lifting piece (11) is selectively disposed at a protruding position at which the lifting piece (11) protrudes upward beyond the upper surface of the discharge portion (10) and at a housing position at which the lifting piece (11) is housed in the housing concave portion (10b).

3. The image forming apparatus (100) according to claim 1, wherein
the lifting piece (11) has a first side surface (11c) that faces the upstream side in the discharge direction and the apparatus body front surface side and a second side surface (11d) that faces the downstream side in the discharge direction and the apparatus body rear surface side, and
the first side surface (11c) and the second side surface (11d) are formed in a color different from that of the rear surface (11b).

4. The image forming apparatus (100) according to claim 1, wherein
the lifting piece (11) has a first side surface (11c) that faces the upstream side in the discharge direction and the apparatus body front surface side and a second side surface (11d) that faces the downstream side in the discharge direction and the apparatus body rear surface side, and
the first side surface (11c) and the second side surface (11d) emit light.

5. The image forming apparatus (100) according to claim 1, wherein
the lifting piece (11) has an upper end surface (11e) that is linked to an upper end of the rear surface and faces the downstream side in the discharge direction and the apparatus body front surface side, and
the upper end surface (11e) is formed in a same color as that of the rear surface (11b).

6. The image forming apparatus (100) according to claim 1, wherein
in a state where the sheet (P) is loaded on the discharge portion (10), a corner portion of the sheet (P) protrudes upward beyond the lifting piece (11).

7. The image forming apparatus (100) according to claim 1, wherein
the lifting piece (11) is configured so that when a number of the sheets (P) on the discharge portion (10) is increased, the rear surface (11b) falls down in such a direction as to approach the upper surface of the discharge portion (10).

8. The image forming apparatus (100) according to claim 1, wherein
the lifting piece (11) is movable in a front-rear direction of the apparatus body (1).

9. The image forming apparatus (100) according to claim 1, wherein
the lifting piece (11) is movable to the upstream side and the downstream side in the discharge direction.

## Patentansprüche

1. Bilderzeugungsvorrichtung (100), umfassend
eine Ausgabeöffnung (9), die in einem Vorrichtungsgehäuse (1) vorgesehen ist und durch die ein Blatt (P), auf dem ein Bild erzeugt wurde, von einer Seite zu einer anderen Seite in einer Links-Rechts-Richtung ausgegeben wird;
einen gehäuseinternen Ausgaberaum (4), der an einer in einer Ausgaberichtung stromabwärtigen Seite der Ausgabeöffnung (9) vorgesehen ist und an einer in der Ausgaberichtung stromabwärtigen Seite und an einer Vorrichtungsgehäuse-Vorderflächenseite offen ist; und
einen Ausgabeabschnitt (10), der in dem gehäuseinternen Ausgaberaum (4) vorgesehen ist und auf den das ausgegebene Blatt (P) geladen wird,
ein Hebeelement (11), das nach oben über eine Oberseite des Ausgabeabschnitts (10) hinaus vorsteht, wobei das Hebeelement (11) eine Ladefläche (11a), auf die das Blatt (P) geladen wird, und eine Rückfläche (11b) aufweist, die auf einer der Ladefläche (11a) gegenüberliegenden Seite angeordnet ist, und die Rückfläche (11b) in einer dunklen Farbe ausgebildet ist,
**dadurch gekennzeichnet, dass**
das Hebeelement (11) an einem Teil des Ausgabeabschnitts (10) auf der in Ausgaberichtung stromabwärtigen Seite und auf der Vorrichtungsgehäuse-Vorderflächenseite vorgesehen ist,
die Ladefläche (11a) in Ausgaberichtung nach Stromabwärts und zur Vorrichtungsgehäuse-Vorderseite hin ansteigend geneigt ist, und einer in Ausgaberichtung stromaufwärts gelegenen Seite und einer Vorrichtungsgehäuse-Rückflächenseite zugewandt ist, so dass das Hebeelement (11) einen Eckabschnitt des Blatts (P) anhebt.

2. Bilderzeugungsvorrichtung (100) nach Anspruch 1, bei der
ein konkaver Gehäuseabschnitt zum Aufnehmen des Hebeelements (11) darin in der Oberseite des Ausgabeabschnitts (10) ausgebildet ist, und
das Hebeelement (11) selektiv in einer vorstehenden Position, in der das Hebeelement (11) nach oben über die Oberseite des Ausgabeabschnitts (10) hinausragt, und in einer Gehäuseposition, in der das Hebeelement (11) in dem konkaven Gehäuseabschnitt (10b) untergebracht ist, angeordnet ist.

3. Bilderzeugungsvorrichtung (100) nach Anspruch 1, bei der
das Hebeelement (11) eine erste Seitenfläche (11c), die der in Ausgaberichtung stromaufwärtigen Seite und der Vorrichtungsgehäuse-Vorderflächenseite zugewandt ist, und eine zweite Seitenfläche (11d) aufweist, die der in Ausgaberichtung stromabwärtigen Seite und der Vorrichtungsgehäuse-Rückflächenseite zugewandt ist, und
die erste Seitenfläche (11c) und die zweite Seitenfläche (11d) in einer Farbe ausgebildet sind, die sich von der der Rückfläche (11b) unterscheidet.

4. Bilderzeugungsvorrichtung (100) nach Anspruch 1, bei der
das Hebeelement (11) eine erste Seitenfläche (11c), die der in Ausgaberichtung stromaufwärtigen Seite und der Vorrichtungsgehäuse-Vorderflächenseite zugewandt ist, und eine zweite Seitenfläche (11d) aufweist, die der in Ausgaberichtung stromabwärtigen Seite und der Vorrichtungsgehäuse-Rückflächenseite zugewandt ist, und
die erste Seitenfläche (11c) und die zweite Seitenfläche (11d) Licht emittieren.

5. Bilderzeugungsvorrichtung (100) nach Anspruch 1, bei der das Hebeelement (11) eine obere Endfläche (11e) aufweist, die mit einem oberen Ende der Rückfläche verbunden ist und der in Ausgaberichtung stromabwärtigen Seite und der Vorrichtungsgehäuse-Vorderflächenseite zugewandt ist, und
die obere Endfläche (11e) in einer Farbe gleich derjenigen der Rückfläche (11b) ausgebildet ist.

6. Bilderzeugungsvorrichtung (100) nach Anspruch 1, bei der
in einem Zustand, in dem das Blatt (P) auf den Ausgabeabschnitt (10) geladen ist, ein Eckabschnitt des Blattes (P) nach oben über das Hebeelement (11) hinausragt.

7. Bilderzeugungsvorrichtung (100) nach Anspruch 1, bei der das Hebeelement (11) so ausgebildet ist, dass, wenn eine Anzahl der Blätter (P) auf dem Ausgabeabschnitt (10) erhöht wird, die Rückfläche (11b) in einer solchen Richtung nach unten fällt, dass sie sich der Oberfläche des Ausgabeabschnitts (10) nähert.

8. Bilderzeugungsvorrichtung (100) nach Anspruch 1, bei der
das Hebeelement (11) in einer Vorwärts-Rückwärts-Richtung des Vorrichtungsgehäuses (1) bewegbar ist.

9. Bilderzeugungsvorrichtung (100) nach Anspruch 1, bei der
das Hebeelement (11) in Ausgaberichtung stromaufwärts und stromabwärts bewegbar ist.

## Revendications

1. Appareil de formation d'images (100), comprenant :
un port de décharge (9) qui est prévu dans un corps d'appareil (1) et à travers lequel une feuille (P) sur laquelle une image a été formée est déchargée d'un côté vers un autre côté dans une direction gauche-droite ;
un espace de décharge interne (4) au corps qui est prévu sur un côté aval du port de décharge (9) dans une direction de décharge et qui est ouvert sur un côté aval dans la direction de décharge et sur un côté de la surface avant du corps d'appareil ; et
une partie de décharge (10) qui est prévue dans l'espace de décharge interne (4) et sur laquelle la feuille (P) déchargée est chargée,
une pièce de levage (11) qui fait saillie vers le haut au-delà d'une surface supérieure de la partie de décharge (10),
la pièce de levage (11) a une surface de chargement (11a) sur laquelle la feuille (P) est chargée, et une surface arrière (11b) qui est disposée sur un côté opposé à la surface de chargement (11a), la surface arrière (11b) étant formée avec une couleur sombre,
**caractérisé en ce que**
la pièce de levage (11) est prévue sur une partie de la partie de décharge (10) du côté aval dans le sens de la décharge et sur le côté de la surface avant du corps d'appareil,
la surface de chargement (11a) est inclinée vers le haut en direction du côté aval dans la direction de déchargement et du côté de la surface avant du corps d'appareil, et fait face à un côté amont dans la direction de déchargement et à un côté de la surface arrière du corps d'appareil, de sorte que la pièce de levage (11) soulève une partie de coin de la feuille (P).

2. Appareil de formation d'images (100) selon la revendication 1, dans lequel
une partie concave de logement pour y loger la pièce de levage (11) est formée dans la surface supérieure de la partie de décharge (10), et
la pièce de levage (11) est disposée sélectivement dans une position saillante dans laquelle la pièce de levage (11) dépasse vers le haut la surface supérieure de la partie de décharge (10) et dans une position de logement dans laquelle la pièce de levage (11) est logée dans la partie concave du logement (10b).

3. Appareil de formation d'images (100) selon la revendication 1, dans lequel
la pièce de levage (11) a une première surface latérale (11e) qui est tournée vers le côté amont dans la direction de décharge et vers le côté de la surface avant du corps d'appareil et une deuxième surface latérale (11d) qui est tournée vers le côté aval dans la direction de décharge et vers le côté de la surface arrière du corps de l'appareil, et
la première surface latérale (11c) et la deuxième surface latérale (11d) sont formées dans une couleur différente de celle de la surface arrière (11b).

4. Appareil de formation d'images (100) selon la revendication 1, dans lequel
la pièce de levage (11) a une première surface latérale (11e) qui est tournée vers le côté amont dans la direction de décharge et vers le côté de la surface avant du corps d'appareil et une deuxième surface latérale (11d) qui est tournée vers le côté aval dans la direction de décharge et vers le côté de la surface arrière du corps d'appareil, et
la première surface latérale (11c) et la deuxième surface latérale (11d) émettent de la lumière.

5. Appareil de formation d'images (100) selon la revendication 1, dans lequel la pièce de levage (11) a une surface d'extrémité supérieure (11e) qui est reliée à une extrémité supérieure de la surface arrière et fait face au côté aval dans la direction de décharge et au côté de la surface avant du corps de l'appareil, et
la surface supérieure de l'extrémité (11e) est de la même couleur que la surface arrière (11b).

6. Appareil de formation d'images (100) selon la revendication 1, dans lequel
dans un état où la feuille (P) est chargée sur la partie de décharge (10), une partie de coin de la feuille (P) dépasse vers le haut au-delà de la pièce de levage (11).

7. Appareil de formation d'images (100) selon la revendication 1, dans lequel
la pièce de levage (11) est configurée de sorte que lorsqu'on augmente le nombre de feuilles (P) sur la partie de décharge (10), la surface arrière (11b) tombe dans une direction telle qu'elle s'approche de la surface supérieure de la partie de décharge (10).

8. Appareil de formation d'images (100) selon la revendication 1, dans lequel
la pièce de levage (11) est mobile dans une direction avant-arrière du corps d'appareil (1).

9. Appareil de formation d'images (100) selon la revendication 1, dans lequel
la pièce de levage (11) est mobile vers l'amont et vers l'aval dans le sens de la décharge.
